Europäisches Patentamt

European Patent Office

Office européen des brevets

(19)

(11) Numéro de publication: **0 291 398**
**B1**

(12) **FASCICULE DE BREVET EUROPEEN**

(45) Date de publication du fascicule du brevet:
**25.07.90**

(51) Int. Cl.⁵: **B60Q 1/42**

(21) Numéro de dépôt: **88401111.5**

(22) Date de dépôt: **06.05.88**

(54) **Commutateur électrique pour l'alimentation des indicateurs de changement de direction d'un véhicule automobile.**

(30) Priorité: **07.05.87 FR 8706496**

(43) Date de publication de la demande:
**17.11.88 Bulletin 88/46**

(45) Mention de la délivrance du brevet:
**25.07.90 Bulletin 90/30**

(84) Etats contractants désignés:
**DE ES FR GB IT SE**

(56) Documents cités:
**DE-A- 1 037 886**
**DE-A- 2 201 157**
**DE-A- 2 515 754**
**DE-A- 2 528 681**
**FR-A- 2 191 235**
**FR-A- 2 199 708**
**FR-A- 2 246 171**
**FR-A- 2 297 750**
**FR-A- 2 326 310**

(73) Titulaire: **JAEGER, 2, rue Baudin,**
**F-92303 Levallois-Perret(FR)**

(72) Inventeur: **Gauthier, Christian, 47, rue Descartes,**
**F-75005 Paris(FR)**

(74) Mandataire: **Martin, Jean-Jacques et al, Cabinet**
**REGIMBEAU 26, Avenue Kléber, F-75116 Paris(FR)**

**Description**

La présente invention concerne le domaine des commutateurs électriques pour l'alimentation des indicateurs de changement de direction d'un véhicule automobile.

La présente invention a pour but de perfectionner les moyens de commande, intégrés à ces commutateurs, assurant le retour automatique de ceux-ci, en position de repos, lorsque le volant est tourné dans un sens de rappel approprié.

On a déjà proposé de nombreux moyens de commande assurant le retour automatique, en position de repos, des commutateurs conçus pour l'alimentation des indicateurs de changement de direction.

Pour la plupart, ces moyens de commande comprennent un levier de commande porté à pivotement sur un support, et une came de contrôle solidaire de l'arbre de direction c'est-à-dire de l'arbre relié au volant et servant à orienter les roues directrices.

On a décrit dans le document FR-A 2 191 235 un commutateur électrique pour l'alimentation des indicateurs de changement de direction d'un véhicule automobile, dans lequel les moyens de commande comprennent un inverseur porté à pivotement sur un support et pourvu d'une pièce magnétique adaptée pour coopérer par friction avec la colonne de direction. Selon ce document la colonne de direction est cylindrique. Elle ne comporte pas de came de contrôle. L'équipage inverseur pourvu de la pièce magnétique ne comprend pas de rampe adaptée pour interférer avec la colonne de direction.

On a décrit dans le document FR-A 2 199 708, un autre commutateur dans lequel les moyens de commande comprennent un inverseur porté à pivotement sur un support, en regard de la came de contrôle, autour d'un axe distinct de l'axe de pivotement du levier, l'inverseur étant muni de structures d'entraînement aptes à coopérer avec le levier de telle sorte que l'inverseur soit déplacé à pivotement autour de son axe, dans une position de travail, lorsque le levier de commande est lui-même entraîné à pivotement vers une position de travail, et un élément pourvu de rampes porté par l'inverseur de telle sorte que les rampes interfèrent avec le trajet de rotation de la came de contrôle lorsque l'inverseur est en position de travail, l'élément pourvu des rampes étant en outre susceptible de se déplacer radialement par rapport à l'axe de pivotement de l'inverseur, et en éloignement de la came de contrôle, à l'encontre de la force élastique exercée par un ressort associé à l'inverseur, pour échapper à la came de contrôle. En outre le document FR-A 2 199 708 l'équipage inverseur est muni d'une surface crantée sur laquelle repose un poussoir sollicité élastiquement. Ainsi l'équipage inverseur est sollicité vers l'arbre de direction.

La présente invention a pour but de perfectionner les moyens de commande en proposant de nouveaux moyens permettant notamment de supprimer le jeu du levier.

Ce but est atteint selon l'invention grâce à un commutateur du type connu en soi de par le document FR-A 2 199 708, comprenant un levier de commande porté à pivotement sur un support et une came de contrôle solidaire de l'arbre de direction, dans lequel les moyens de commande comprennent un inverseur porté à pivotement sur le support, en regard de la came de contrôle, autour d'un axe distinct de l'axe de pivotement du levier, l'inverseur étant muni de structures d'entraînement aptes à coopérer avec le levier de telle sorte que l'inverseur soit déplacé à pivotement autour de son axe, dans une position de travail, lorsque le levier de commande est lui-même entraîné à pivotement vers une position de travail, et un élément pourvu de rampes porté par l'inverseur de telle sorte que les rampes interfèrent avec le trajet de rotation de la came de contrôle lorsque l'inverseur est en position de travail, l'élément pourvu des rampes étant en outre susceptible de se déplacer radialement par rapport à l'axe de pivotement de l'inverseur, et en éloignement de la came de contrôle, à l'encontre de la force élastique exercée par un ressort associé à l'inverseur, pour échapper à la came de contrôle, les rampes comprenant deux sous-ensembles symétriques par rapport à un plan qui coïncide au repos avec un plan contenant l'axe de pivotement du levier de commande, l'axe de pivotement de l'inverseur et l'axe de l'arbre de direction, caractérisé par le fait que:

– le levier de commande est muni d'un plot d'indexation sollicité élastiquement en regard d'une surface crantée,
– chacun des deux sous-ensembles comprend deux surfaces,
– que deux surfaces de chacun des deux sous-ensembles forment entre elles un angle rentrant tandis que les deux autres surfaces de chacun des deux sous-ensembles forment entre elles un angle saillant.

Par rapport à l'enseignement du document FR-A 2 199 708, outre la suppression du jeu du levier, la présente invention autorise une perte de course entre le levier et l'inverseur comme cela sera expliqué par la suite.

Par ailleurs, la présente invention a pour avantage, par rapport au document FR-A 2 199 708, de ne pas durcir l'indexation, c'est-à-dire de ne pas modifier les forces d'indexation mises en jeu, lorsque l'arbre de direction force les moyens de retour automatique.

D'autres caractéristiques, buts et avantages de la présente invention apparaîtront à la lecture de la description détaillée qui va suivre et en regard des dessins annexés donnés à titre d'exemple non limitatif et sur lesquels:

– la figure 1 représente une vue schématique des moyens de commande intégrés au commutateur électrique conforme à la présente invention, en position de repos, c'est-à-dire lorsqu'aucun des indicateurs de changement de directicon n'est alimenté,
– la figure 2 représente une vue schématique similaire des moyens de commande, placés en position de travail, c'est-à-dire lorsque l'un des indicateurs de changement de direction est alimenté; la figure 2 illustre plus précisément la coopération des moyens de commande et de la came de contrôle portée par l'arbre de direction,

– la figure 3 représente une vue similaire des moyens de commande en position dite de «forçage», c'est-à-dire une position obtenue lorsque le conducteur maintient le levier de commande en position de travail, pour maintenir l'alimentation de l'un des indicateurs de changement de direction, alors que la came de contrôle portée par l'arbre tend à ramener le commutateur en position de repos, et

– la figure 4 représente une variante de la liaison d'extrémité à perte de course.

On aperçoit sur les figures annexées un levier de commande 10, un arbre de direction 30 qui porte une came de contrôle 32 et de moyens de commande 50 placés entre le levier 10 et la came de contrôle 32 pour assurer un retour automatique du commutateur en position de repos.

De nombreux commutateurs électriques pour l'alimentation des indicateurs de changement de direction d'un véhicule automobile ont déjà été proposés. La structure générale de ces commutateurs sort du cadre de la présente invention. Pour cette raison, la structure du commutateur électrique n'a pas été représentée sur les figures annexées et ne sera pas décrite en détail par la suite.

Bien entendu le levier de commande 10 est associé à un équipage porte-contact adapté pour assurer l'effet de commutation nécessaire pour l'alimentation des indicateurs de changement de direction. Cet équipage porte-contact n'a pas été représenté sur les figures annexées pour simplifier l'illustration comme indiqué précédemment.

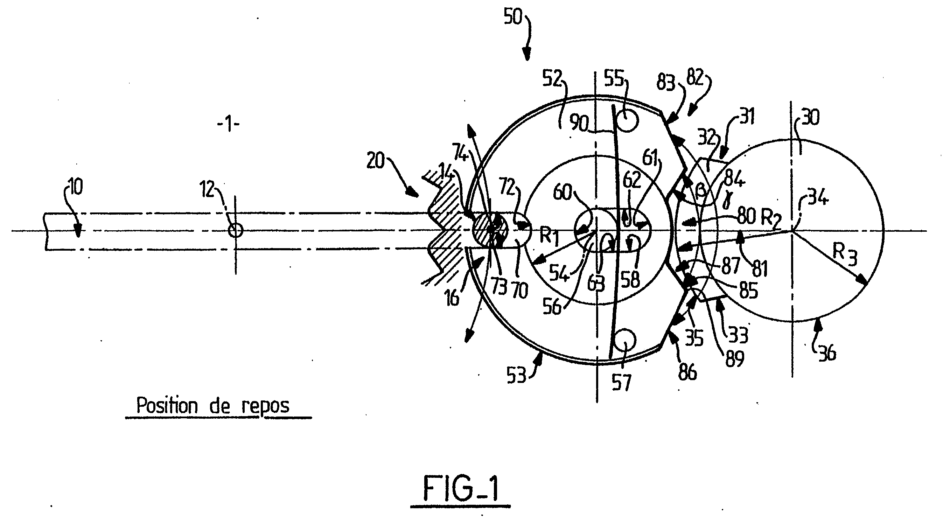

On notera cependant que comme illustré sur les figures annexées, le levier de commande 10 est guidé à pivotement sur un support portant la référence générale 1, autour d'un axe 12. L'axe 12 s'étend transversalement à la direction d'élongation longitudinale du levier 10. Il s'étend également transversalement au plan des figures 1 à 4 annexées.

Le levier de commande 10 et/ou l'équipage porte-contact associé est indexé lors de son pivotement autour de l'axe 12. Pour cela, de façon classique en soi, le levier de commande 10 et/ou l'équipage porte-contact associé peut être muni d'un plot d'indexation sollicité élastiquement en regard d'une surface crantée schématiquement représentée sous la référence 20 sur la figure 1 annexée. La structure de tels moyens d'indexation classique en soi ne sera pas décrite plus en détail par la suite.

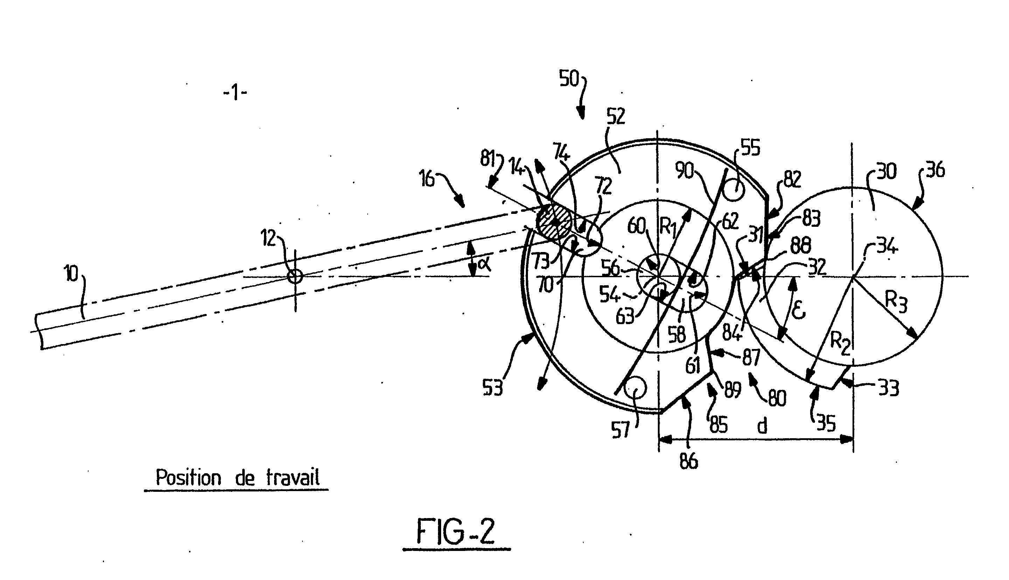

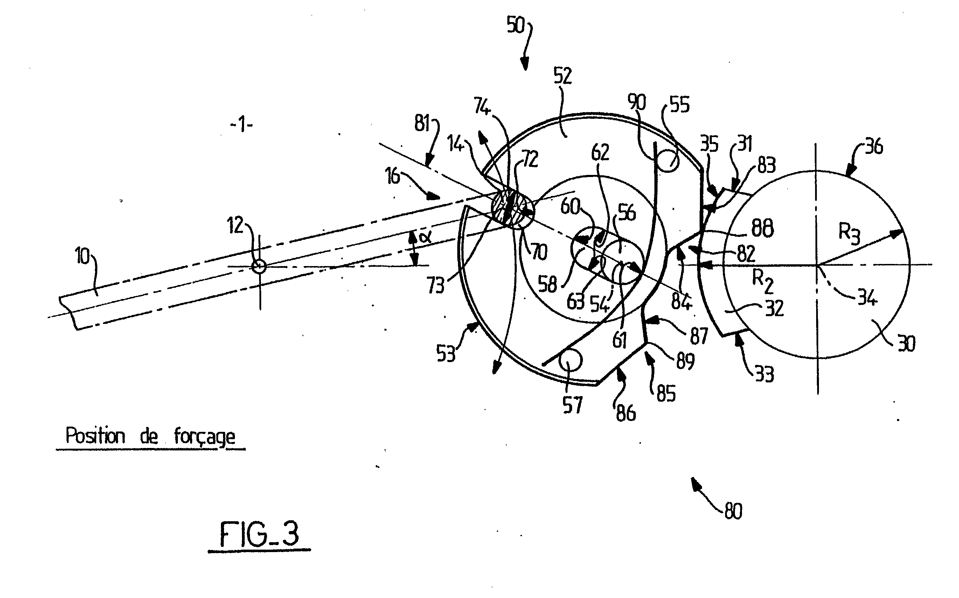

Le levier de commande 10 est illustré en position de repos sur la figure 1, position pour laquelle aucun indicateur de changement de direction n'est alimenté. Par contre, le levier de commande 10 est illustré dans une position de travail sur les figures 2 et 3. Dans cette position de travail l'un des indicateurs de changement de direction est alimenté. On notera que cette position de travail est obtenue en pivotant le levier de commande 10 autour de l'axe 12, d'un angle $\alpha$, par rapport à la position de repos.

Bien entendu, il existe une seconde position de travail, symétrique de celle illustrée sur les figures 2 et 3, par rappport à la position de repos, pour l'alimentation de l'autre voie d'indicateur de changement de direction.

L'arbre de direction 30 illustré schématiquement sur les figures annexées est guidé à rotation autour d'un axe 34, parallèle selon l'illustration annexée, à l'axe 12. La surface périphérique, généralement cylindrique, de l'arbre de direction 30 est référencée 36. La came de contrôle 32 est formée d'un secteur de couronne centré sur l'axe 34, présentant une plus grande extension radiale que l'arbre de direction 30 et en saillie sur la périphérie 36 de celle-ci. Le rayon de la came de contrôle 32 est référencé $R_2$, tandis que le rayon de l'arbre de direction 30 est référencé $R_3$. Selon l'illustration annexée, l'ouverture angulaire de la came de contrôle 32 par rapport à l'axe 34 est de l'ordre de 80°.

Sur les figures annexées, la périphérie de la came de contrôle 32 centrée sur l'axe 34 est référencée 35. Les flancs de la came de contrôle 32 sont référencés 31, 33.

Les moyens de commande 50 intercalés entre le levier de commande 10 et la came de contrôle 32 comprennent pour l'essentiel un inverseur 52 et un ressort 90.

Selon l'illustration annexée, l'inverseur 52 a la forme générale d'un disque. Il est monté à rotation sur le support 1 autour d'un axe 54. En l'espèce cet axe 54 est matérialisé par un tourillon 56 solidaire du support 1. Selon l'illustration annexée, l'axe 54 est parallèle aux axes 12 et 34 précités. L'axe 54 est situé entre les axes 12 et 34 précités. De plus, les axes 12, 54 et 34 sont coplanaires.

L'inverseur 52 possède un plan axial de symétrie qui est référencé 81. Ce plan de symétrie 81 est confondu avec le plan contenant les axes 12, 54 et 34, en position de repos.

Le tourillon 56 est engagé dans une lumière oblongue 58 ménagée dans l'inverseur 52. La lumière 58 part du centre de l'inverseur 52 et s'étend radialement par rapport au centre de celui-ci en éloignement du levier 10. La lumière 58 est adaptée pour guider l'inverseur 52 à rotation autour de l'axe 54 (confondu en fonctionnement normal avec le centre de l'inverseur), tout en autorisant un déplacement radial de l'inverseur 52 par rapport à l'axe 54. Pour cela, la lumière 58 est délimitée par deux surfaces concaves hémicylindriques opposées 60, 61 raccordées par deux plans parallèles 62, 63. Les calottes hémicylindriques 60, 61 possèdent un rayon de courbure complémentaire du tourillon 56. La calotte hémicylindrique 60 est centrée sur l'inverseur 52. De plus, la distance séparant les surfaces planes 62, 63 est complémentaire du diamètre du tourillon 56. Les surfaces planes 62, 63 sont parallèles au plan de symétrie 81.

En outre, l'inverseur 52 est muni de structures d'entraînement aptes à coopérer avec le levier de commande 10 de telle sorte que l'inverseur 52 soit déplacé à pivotement autour de l'axe 54, dans une position de travail lorsque le levier de commande 10 est lui-même entraîné à pivotement vers une position de travail.

Selon l'illustration annexée, les structures d'entraînement précitées comprennent d'une part une découpe oblongue 70 ménagée dans l'inverseur 52, d'autre part un téton d'entraînement 14 solidaire du levier de commande 10 et engagé dans la découpe 70. Le téton d'entraînement 14 est solidaire de l'extrémité 16 du levier de commande 10 adjacente à l'inverseur 52. Le téton de commande 14 est formé d'une tige cylindrique s'étendant parallèlement à l'axe de pivotement 12. La découpe 70 débouche sur la périphérie 53 de l'inverseur. Elle est délimitée par une calotte hémicylindrique concave 72 prolongée vers la périphérie 53 de l'inverseur 52 par deux surfaces planes parallèles 73, 74. Les surfaces 73, 74 sont parallèles en plan de symétrie 81.

Le rayon de courbure de la calotte hémicylindrique 72 est complémentaire de téton d'entraînement 14. De plus, la distance séparant les surfaces planes 73 et 74 est complémentaire du diamètre du téton 14. Ainsi, ce dernier peut être engagé dans la découpe 70 tout en se déplaçant librement radialement dans la découpe 70 par rapport au centre de l'inverseur 52.

L'homme de l'art comprendra aisément que la liaison ainsi définie entre le levier de commande 10 et l'inverseur 52 assure un déplacement de l'inverseur 52 dans un sens opposé au levier de commande 10.

En d'autres termes, lorsque le levier de commande 10 est déplacé à pivotement autour de l'axe 12 dans un sens contraire aux aiguilles d'une montre, l'inverseur 52 est par contre déplacé à pivotement autour de l'axe 54 dans le sens des aiguilles d'une montre, et inversement.

L'inverseur 52 est par ailleurs pourvu de rampes 80 aptes à coopérer avec la came de contrôle 32. Les rampes 80 sont ménagées sur la périphérie 53 de l'inverseur 52. Elles présentent une symétrie par rapport au plan 81 passant par le centre de l'inverseur 52 et coïncidant, en position de repos, avec le plan contenant les axes 12, 54 et 34. Les rampes 80 sont ménagées sur une couronne dont le rayon intérieur est référencé $R_1$.

Plus précisément, le système de rampes 80 comprend deux sous-ensembles 82, 85 symétriques par rapport au plan 81.

Chaque sous-ensemble 82, 85 comprend deux rampes 83 et 84 d'une part, 86 et 87 d'autre part. Les rampes 83, 84, 86 et 87 sont délimitées par des génératrices parallèles à l'axe 54.

Les surfaces symétriques 84 et 87, les plus proches du plan de symétrie 81 définissent entre elles un angle rentrant, c'est-à-dire un angle aigu, référencé β sur les figures annexées. Les surfaces 84 et 87 seront dites principales par la suite.

Par contre les surfaces symétriques 83 et 86, les plus éloignées du plan de symétrie 81, définissent entre elles un angle saillant ou obtus référencé γ. Les surfaces 83 et 86 seront dites secondaires par la suite.

La distance séparant les axes 54 et 34, le rayon interne $R_1$ des rampes 80 et l'ouverture angulaire des rampes 80 par rapport au centre de l'inverseur sont déterminés de telle sorte que en position de repos, lorsque le plan de symétrie 81 est coplanaire des axes 54 et 34, les rampes 80 n'interfèrent pas avec la zone couverte par la came de contrôle 32 lors de la rotation de l'arbre de direction 30 autour de l'axe 34 (voir figure 1).

Par contre, lorsque l'inverseur 52 est déplacé dans l'une des deux position de travail, par le levier de commande 10, comme illustré sur la figure 2, l'un des deux sous-ensembles 82, 85 des rampes 80 pénètre dans la zone de déplacement de la came de contrôle 32 pour coopérer avec celle-ci. Pour cela les surfaces formant rampe 83, 84, 85 et 86 sont placées vers l'inverseur 52 à l'extérieur d'une plage centrale de rayon $R_1$ telle que la somme du rayon $R_1$ et du rayon $R_2$ de la périphérie de la came de contrôle 32 soit sensiblement égale tout en restant légèrement intérieure à la distance d séparant les axes 54 et 34.

La pointe définie à la jonction de la surface principale 84 et de la surface secondaire 83 est référencée 88. La pointe définie à la jonction de la surface principale 87 et de la surface secondaire 86 est référencée 89.

Les surfaces principales 84 et 87 sont orientées sensiblement selon une bissectrice de l'angle formé par un rayon dressé à partir du centre de l'inverseur 52 vers l'une des pointes 88 et 89 respectivement et une normale au plan de symétrie 81 (soit une normale à la direction d'élongation de la lumière 58 et de la découpe 70.

Les surfaces secondaires 83 et 86 doivent être orientées sensiblement transversalement au plan de symétrie 81. Toutefois l'orientation des surfaces secondaires 83 et 86 doit être contrôlée en association avec leur extension radiale de telle sorte que lorsque l'inverseur 52 est en position de travail, la came de contrôle 32 ne vienne jamais reposer contre la périphérie circulaire de l'inverseur, mais prenne appui sur l'une des surfaces secondaires précitées 83 et 86.

Le ressort 90 précité est adapté pour solliciter l'inverseur 52 vers une position dans laquelle le centre de l'inverseur 52 coïncide avec l'axe de pivotement 54 comme illustré sur la figure 1. Cependant, le ressort 90 autorise un déplacement radial de l'inverseur 52 par rapport à l'axe 54, par déplacement du tourillon 56 dans la lumière 58.

Le ressort 90 peut être formé d'un ressort intercalé entre le téton d'entraînement 14 et le fond 72 de la découpe 70.

Cependant, selon l'illustration annexée, le ressort 90 est formé d'une lamelle intercalée entre le tourillon 56 et deux pions 55, 57 solidaires de l'inverseur 52.

Les deux pions 55, 57 sont symétriques par rapport au plan 81 précité. La lamelle 90 formant ressort s'étend pour l'essentiel transversalement à ce plan de symétrie 81. La lamelle 90 formant ressort et les deux pions 55, 57 sont placés à l'opposé du centre de l'inverseur 52 par rapport à la découpe 70.

Le fonctionnement des moyens de commande qui viennent d'être décrits est le suivant.

En position de repos, comme illustré sur la figure 1 annexée, le plan 81 de symétrie de l'inverseur 52 coïncide avec le plan contenant des axes 12, 54 et 34 et avec le centre du téton d'entraînement 14. La lame 90 formant ressort sollicite l'inverseur 52 en rapprochement de l'arbre de direction 30. Le centre de l'inverseur 52 coïncide alors avec le centre 54 du tourillon 56. Cependant, les rampes 80 sont placées à l'extérieur de la zone couverte par la came de contrôle 32 lors de la rotation de l'arbre de direction 30 autour de l'axe 34. De ce fait, la rotation de l'arbre de direction est sans aucun effet sur l'inverseur 52 et sur le commutateur.

Lorsque le levier de commande 10 est déplacé à pivotement autour de l'axe 12 dans un sens (par exemple le sens contraire des aiguilles d'une montre) l'inverseur 52 est déplacé dans le sens opposé (par exemple le sens des aiguilles d'une montre) grâce à la coopération définie entre le téton d'entraînement 14 et la découpe 70. Simultanément le téton d'entraînement 14 se déplace dans la découpe 70 vers la périphérie de l'inverseur 52, comme illustré sur la figure 1.

Le plan 81 de symétrie de l'inverseur 52 est alors incliné d'un angle ε par rapport au plan contenant les axes 12, 54 et 34.

L'un des sous-ensembles 82 ou 85 des rampes 80 pénètre dans la zone de déplacement de la came de contrôle 32.

Lorsque l'arbre de direction est entraîné à rotation dans un sens correspondant au sens de pivotement du levier de commande 10 (sens contraire des aiguilles d'une montre selon la représentation de la figure 2) l'un des flancs 33 ou 31 de la came de contrôle 32 vient en appui contre l'une des rampes secondaires 83 ou 86. Ces rampes 83, 86 sont orientées sensiblement transversalement à la direction d'élongation de la lumière 58 et de la découpe 70. La came de contrôle 32 exerce alors sur l'inverseur 52 une force qui maintient l'inverseur dans sa position de travail et possède une composante parallèle à la direction d'élongation de la lumière 58 et de la découpe 70. De ce fait l'inverseur 52 se déplace radialement par rapport à l'axe 54, en éloignement de la colonne de direction 30 comme illustré sur la figure 3, à l'encontre de la sollicitation du ressort 90. Simultanément le téton d'entraînement 14 se déplace dans la découpe 70. Dans cette position, les rampes 80 sont placées à l'extérieur de la zone de déplacement de la came de contrôle 32.

L'arbre de direction 30 peut alors continuer sa rotation. Lorsque la came de contrôle 32 échappe à la rampe 83 ou 86 précitée, l'inverseur 52 est ramené en position initiale de travail par le ressort 90, comme illustré sur la figure 2.

Par contre, lorsque l'arbre de direction 30 est entraîné en rotation dans un sens opposé à l'inclinaison du levier de commande 10 (soit dans le sens des aiguilles d'une montre selon la représentation de la figure 2) la came de contrôle 32 vient cette fois contre l'une des rampes principales 84 ou 87 pour exercer sur celle-ci une force de rappel qui tend à ramener l'inverseur 52 et le levier de commande 10 dans leur position de repos telle qu'illustrée sur la figure 1 par pivotement de ceux-ci autour de leurs axes respectifs 12 et 54.

On notera que la position illustrée sur la figure 3 peut également être obtenue lorsque le commutateur est déplacé en position de travail alors que de façon aléatoire la came de contrôle 32 est placée en regard des rampes 80, ou encore lorsque le conducteur maintient manuellement le levier de commande 10 en position de travail alors que la came de contrôle 32 tend à ramener l'inverseur en position de repos.

Dans ce dernier cas, la position illustrée sur la figure 3 correspond à une position de forçage. Elle est obtenue lorsque l'un des flancs 31, 33 de la came decontrôle vient solliciter l'une des rampes principales 84, 87. Le déplacement radial autorisé de l'inverseur 52, par rapport à l'axe 54 permet de maintenir le commutateur en position de travail pour alimenter un indicateur de changement de direction.

En variante, les structures d'entraînement reliant le levier de commande 10 et l'inverseur 52 pourraient être formées non point d'un téton solidaire du levier 10 en prise avec une découpe ménagée dans l'inverseur, mais d'une découpe oblongue ménagée dans le levier de commande 10 et recevant un téton d'entraînement solidaire de l'inverseur 52.

De même le guidage à pivotement et à déplacement radial de l'inverseur 52 sur le support 1 par rapport à l'axe 54 pourrait être obtenu non pas avec un tourillon solidaire du support 1 en prise avec une lumière oblongue ménagée dans l'inverseur 52, mais à l'aide d'un tourillon solidaire de l'inverseur en prise avec une lumière oblongue ménagée dans le support 1.

De plus, le cas échéant, les rampes 80 comprenant les surfaces 83, 84, 86 et 87 précitées, solidaires de l'inverseur 52 selon l'illustration annexée, pourraient être ménagées sur un élément séparé porté par l'inverseur 52 pour suivre celui-ci à pivotement lors de sa rotation autour de l'axe 54, tout en autorisant un déplacement radial de l'élément portant les rampes par rapport à l'axe de pivotement de l'inverseur, en éloignement de la came de contrôle, à l'encontre de la force élastique exercée par un ressort associé à l'inverseur, pour passer en position de forçage. Dans ce cas, l'inverseur 52 serait guidé étroitement à rotation autour de l'axe 54, sans possibilité de déplacement radial par rapport à celui-ci.

On notera que l'axe 12 de pivotement du levier de commande 10 peut être transversal à l'axe 54 de pivotement de l'inverseur.

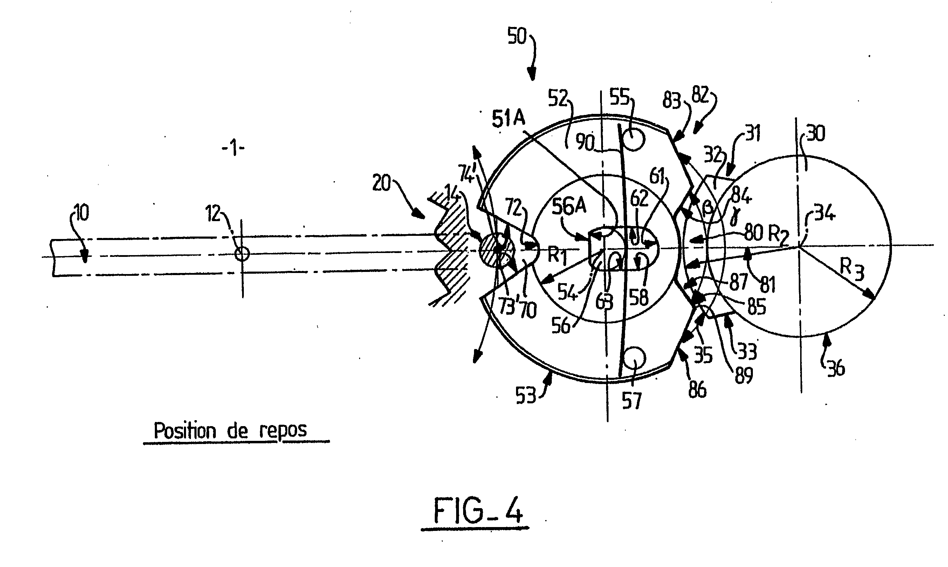

Les structures d'entraînement 70, 14 définissant une liaison d'entraînement entre le levier 10 et l'inverseur 52 peuvent être à perte de course. Pour cela, il suffit que le diamètre du téton 14 soit inférieur à la distance séparant les surfaces planes 73, 74, ou que celles-ci ne soient plus parallèles, comme illustré sur la figure 4. On autorise ainsi des débattements angulaires α différents pour le levier 10, sans changer la structure des moyens précédemment décrits et illustrés sur les figures annexées.

Cependant pour maintenir une indexation de l'inverseur 52, lorsque le levier 10 est en position de repos, il est avantageux d'utiliser un tourillon 56 non cylindrique de révolution coopérant avec une surface homologue de la lumière 58. Plus précisément le tourillon 56 possède un méplat 56A perpendiculaire au plan contenant les axes 12, 54 et 34 et dirigé vers le levier 10, alors que la lumière 58 possède un méplat complémentaire 51A à la place de la surface hémicylindrique 51 précitée, ce méplat 51A étant perpendiculaire au plan de symétrie 81.

## Revendications

1. Commutateur électrique pour l'alimentation des indicateurs de changement de direction d'un véhicule automobile comportant des moyens de commande adaptés pour assurer un retour automatique du commutateur en position de repos, du type comprenant un levier de commande (10) porté à pivotement sur un support (1) et une came de contrôle (32) solidaire de l'arbre de direction (30), dans lequel les moyens de commande comprennent un inverseur (52) porté à pivotement sur le support (1), en regard de la came de contrôle (32), autour d'un axe (54) distinct de l'axe de pivotement du levier (10), l'inverseur (52) étant muni de structures d'entraînement (70, 14) aptes à coopérer avec le levier (10) de telle sorte que l'inverseur (52) soit déplacé à pivotement autour de son axe (54), dans une position de travail, lorsque le levier de commande (10) est lui-même entraîné à pivotement vers une position de travail, et un élément pourvu de rampes (80) porté par l'inverseur (52) de telle sorte que les rampes (80) interfèrent avec le trajet de rotation de la came de contrôle (32) lorsque l'inverseur (52) est en position de travail, l'élément pourvu des rampes (80) étant en outre susceptible de se déplacer radialement par rapport à l'axe (54) de pivotement de l'inverseur (52), et en éloignement de la came de contrôle (32), à l'encontre de la force élastique exercée par un ressort (90) associé à l'inverseur, pour échapper à la came de contrôle (52), les rampes (80) comprenant deux sous-ensembles (82, 85) symétriques par rapport à un plan (81) qui coïncide au repos avec un plan contenant l'axe (12) de pivotement du levier de commande (10), l'axe (54) de pivotement de l'inverseur (52) et l'axe (34) de l'arbre de direction (30), caractérisé par le fait que
— le levier de commande (10) est muni d'un plot d'indexation sollicité élastiquement en regard d'une surface crantée (20),
— chacun des deux sous-ensembles (82, 85) comprend deux surfaces (83, 84; 86, 87),
— que deux surfaces (84, 87) de chacun des deux sous-ensembles forment entre elles un angle rentrant (β), tandis que les deux autres surfaces (83, 86) de chacun des deux sous-ensembles forment entre elles un angle saillant (γ).

2. Commutateur électrique selon la revendication 1, caractérisé par le fait que les structures d'entraînement reliant l'inverseur (52) et le levier de commande (10) comprennent une découpe (70) oblongue radiale par rapport à l'axe (54, 12) de pivotement de l'inverseur ou du levier et un téton d'entraînement (14) engagé dans la découpe.

3. Commutateur électrique selon la revendication 2, caractérisé par le fait que la découpe (70) est ménagée dans l'inverseur (52) tandis que le téton d'entraînement (14) est solidaire du levier de commande (10).

4. Commutateur électrique selon l'une des revendications 1 à 3, caractérisé par le fait que l'axe (12) de pivotement du levier de commande (10), l'axe (54) de pivotement de l'inverseur (52) et l'axe (34) de pivotement de l'arbre de direction (30) sont coplanaires.

5. Commutateur électrique selon l'une des revendications 1 à 4, caractérisé par le fait que l'inverseur (52) est guidé sur le support (1) par l'intermédiaire d'une lumière oblongue (58) radiale par rapport à l'axe (54) de pivotement de l'inverseur et un tourillon (56) engagé dans la lumière (58).

6. Commutateur électrique selon la revendication 5, caractérisé par le fait que la lumière (58) est ménagée dans l'inverseur (52) tandis que le tourillon (56) est solidaire du support (1).

7. Commutateur électrique selon l'une des revendications 1 à 6, caractérisé par le fait que le ressort (90) est formé d'une lame.

8. Commutateur électrique selon l'une des revendications 1 à 7, caractérisé par le fait que chacun des deux sous-ensembles comprend une surface principale (84, 87) dirigée vers le plan de symétrie (81) et orientée sensiblement selon une bissectrice de l'angle formé entre un rayon dressé à partir de l'axe de pivotement (54) de l'inverseur (52) et une normale au plan de symétrie (81).

9. Commutateur électrique selon l'une des revendications 1 à 8, caractérisé par le fait que chacun des deux sous-ensembles comprend une surface secondaire (83, 86) orientée sensiblement selon une normale au plan de symétrie (81).

10. Commutateur électrique selon l'une des revendications 1 à 9, caractérisé par le fait que l'élément portant les rampes (80) est solidaire de l'inverseur (52).

11. Commutateur électrique selon l'une des revendications 1 à 10, caractérisé par le fait que les structures d'entraînement (70, 14) définissant une liaison d'entraînement entre le levier (10) et l'inverseur (52) sont à perte de course.

## Patentansprüche

1. Elektrischer Schalter für die Stromversorgung der Fahrtrichtungsanzeiger eines Kraftfahrzeuges, mit Betätigungsorganen, welche den Schalter selbsttätig in eine Ruhestellung zurückzustellen vermögen, und mit einem auf einer Unterlage (1) schwenkbar gelagerten Betätigungshebel (10) und einer mit der Lenkspindel (30) fest verbundenen Kurvenscheibe (32), bei welchem Schalter die Betätigungsorgane einen Umschalter (52) aufweist, der auf der Unterlage (1), der Kurvenscheibe (32) gegenüber um eine von der Schwenkachse des Hebels (10) verschiedene Achse (54) schwenkbar gelagert ist, dabei Mitnehmerorgane (70, 14) aufweist, die mit dem Hebel (10) in der Weise zusammenzuwirken vermögen, daß der Umschalter (52) um seine Achse (54) in eine Arbeitsstellung geschwenkt wird, wenn der Betätigungshebel (10) selbst in eine Arbeitsstellung geschwenkt wird, und ein mit Schrägflächen (80) versehenes, auf dem Umschalter (52) in der Weise gelagertes Bauteil, daß die Schrägflächen (80) in die Drehbewegungsbahn der Kurvenscheibe (32) hineinragen, wenn der Umschalter (52) die Arbeitsstellung einnimmt, wobei das mit den Schrägflächen (80) versehene Bauteil ferner in bezug auf die Schwenkachse (54) des Umschalters (52) radial und entgegengesetzt zur Kurvenscheibe (32) gegen die von einer mit dem Umschalter verbundenen Feder (90) ausgeübte elastische Kraft verstellbar ist, um der Kurvenscheibe (52) auszuweichen, dabei die Schrägflächen (80) zwei Untergruppen (82, 85) umfassen, welche zu einer Ebene (81) symmetrisch sind, die in der Ruhestellung mit einer durch die Schwenkachse (12) des Betätigungshebels (10), die Schwenkachse (54) des Umschalters (52) und die Achse (34) der Lenkspindel (30) gehenden Ebene zusammenfällt, dadurch gekennzeichnet, daß
– der Betätigungshebel (10) mit einem Verriegelungsklotz versehen ist, der einer gezahnten Fläche (20) gegenüber elastisch vorgespannt ist,
– jede der beiden Untergruppen (82, 85) zwei Flächen (83, 84; 86, 87) umfaßt,
– von jeder der beiden Untergruppen zwei Flächen (84, 87) zwischen sich einen einspringenden Winkel (β), dagegen die beiden anderen Flächen (83, 86) von jeder der beiden Untergruppen zwischen sich einen vorspringenden Winkel (γ) bilden.

2. Elektrischer Schalter nach Anspruch 1, dadurch gekennzeichnet, daß die den Umschalter (52) mit dem Betätigungshebel (10) verbindenden Mitnehmerorgane eine in bezug auf die Schwenkachse (54, 12) des Umschalters bzw. des Hebels radiale Ausnehmung (70) von überwiegender Längserstreckung und einen in die Ausnehmung eingreifenden Mitnehmerzapfen (14) umfassen.

3. Elektrischer Schalter nach Anspruch 2, dadurch gekennzeichnet, daß die Ausnehmung (70) im Umschalter (52) ausgebildet ist, dagegen der Mitnehmerzapfen (14) mit dem Betätigungshebel (10) fest verbunden ist.

4. Elektrischer Umschalter nach einem der Ansprüche 1 bis 3, dadurch gekennzeichnet, daß die Schwenkachse (12) des Betätigungshebels (10), die Schwenkachse (54) des Umschalters (52) und die Drehachse (34) der Lenkspindel (30) in einer gemeinsamen Ebene angeordnet sind.

5. Elektrischer Umschalter nach einem der Ansprüche 1 bis 4, dadurch gekennzeichnet, daß der Umschalter (52) auf der Unterlage (1) mittels einer in bezug auf die Schwenkachse (54) des Umschalters radiale Aussparung (58) von überwiegender Längserstreckung und von einem in die Aussparung (58) eingreifenden Drehzapfen (56) geführt ist.

6. Elektrischer Umschalter nach Anspruch 5, dadurch gekennzeichnet, daß die Aussparung (58) in den Umschalter (52) eingearbeitet ist, dagegen der Drehzapfen (56) mit der Unterlage (1) fest verbunden ist.

7. Elektrischer Umschalter nach einem der Ansprüche 1 bis 6, dadurch gekennzeichnet, daß die Feder (90) von einem Blatt gebildet ist.

8. Elektrischer Umschalter nach einem der Ansprüche 1 bis 7, dadurch gekennzeichnet, daß jede der beiden Untergruppen eine Hauptfläche (84, 87), die gegen die Symmetrieebene (81) weist und zumindest annähernd nach einer Winkelhalbierenden des Winkels ausgerichtet ist, der von einem ab der Schwenkachse (54) des Umschalters (52) gezogenen Radius und einer Senkrechten auf die Symmetrieebene (81) eingeschlossen ist.

9. Elektrischer Umschalter nach einem der Ansprüche 1 bis 8, dadurch gekennzeichnet, daß jede der beiden Untergruppen eine Nebenfläche (83, 86) aufweist, die zumindest annähernd nach einer Senkrechten auf die Symmetrieebene (81) ausgerichtet ist.

10. Elektrischer Umschalter nach einem der Ansprüche 1 bis 9, dadurch gekennzeichnet, daß das die Schrägflächen (80) tragende Bauteil mit dem Umschalter (52) fest verbunden ist.

11. Elektrischer Schalter nach einem der Ansprüche 1 bis 10, dadurch gekennzeichnet, daß die Mitnehmerorgane (70, 14), welche eine Antriebsverbindung zwischen dem Hebel (10) und dem Umschalter (52) bilden, mit Totgang behaftet sind.

## Claims

1. An electric switch for controlling the change-of-direction indicators of a motor vehicle, and including control means suitable for ensuring that the switch returns automatically to a rest position, the switch being of the type comprising a control lever (10) pivotally mounted on a support (1) and a control cam (32) fixed to the steering wheel shaft (30), in which the control means comprise a reversing plate (52) pivotally mounted on the support (1) about an axis (54) different from the pivot axis of the lever (10) and facing the control cam (32), the reversing plate (52) being provided with drive structures (70, 14) suitable for co-operating with the lever (10) in such a manner that the reversing plate (52) is pivoted about its axis (54) into a working position when the control lever (10) is itself pivoted into a working position, together with a component provided with slopes (80) and carried by the reversing plate (52) in such a manner that the slopes (80) interfere with the rotary path of the control cam (32) when the reversing plate (52) is in the working position, the component having ramps (80) being, in addition, suitable for moving radially relative to the pivot axis (54) of the reversing plate (52) away from the control cam (32) against the resilient force exerted by a spring (90) associated with the reversing plate, thereby enabling it to escape from the control cam (32), the slopes (80) comprising two subassemblies (82, 85) which are symmetrical in regard of a plane (81) which coincides, when in rest position, with a plane passing through the pivotal axis (12) of the control lever (10), the pivotal axis (54) of the reversing plote (52) and the axis (34) of the steering wheel shaft (30), characterized by the fact that:
– the control lever (10) is provided with an indexing stud which is resiliently urged towards a toothed surface (20),
– each of the two sub-assemblies (82, 85) comprises two surfaces (83, 84; 86, 87)
– and two surfaces (84, 87) of each sub-assembly form together a re-entrant angle (β), while the two other surfaces (83, 86) of each sub-assembly form together a salient angle (γ).

2. An electric switch according to claim 1, characterized by the fact that the drive structures linking the reversing plate (52) and the control lever (10) include an oblong cut-out (70) extending radially relative to the axis (54, 12) about which the reversing plate or the lever pivots, and a drive stud (14) engaged in the cut-out.

3. An electric switch according to claim 2, characterized by the fact that the cut-out (70) is provided in the reversing plate (52) whereas the drive stud (14) is fixed to the control lever (10).

4. An electric switch according to any one of claims 1 to 3, characterized by the fact that the control lever pivot axis (12), the reversing plate pivot axis (54), and the steering wheel shaft pivot axis (34) are coplanar.

5. An electric switch according to any one of claims 1 to 4, characterized by the fact that the reversing plate (52) is guided on the support (1) by means of an oblong slot (58) extending radially relative to the pivot axis (54) of the reversing plate and by a stub axis (56) engaged in the slot (58).

6. An electric switch according to claim 5, characterized by the fact that the slot (58) is provided in the reversing plate (52), whereas the stub axle (56) is fixed to the support (1).

7. An electric switch according to any one of claims 1 to 6, characterized by the fact that the spring (90) is in the form of a spring blade.

8. An electric switch according to one of claims 1 to 7, characterized by the fact that each of the two subassemblies includes a main surface (84, 87) directed towards the plane of symmetry (81) and oriented substantially along a bisector of the angle formed between a radius running from the pivot axis (54) of the reversing plate (52) and a normal to the plane of symmetry (81).

9. An electric switch according to any one of claims 1 to 8, characterized by the fact that each of the two subassemblies includes a secondary surface (83, 86) oriented substantially along a normal to the plane of symmetry (81).

10. An electric switch according to any one of claims 1 to 9, characterized by the fact that the component carrying the slopes (80) is fixed relative to the reversing plate (52).

11. An electric switch according to any one of claims 1 to 10, characterized by the fact that the drive structures (70, 14) define a drive link between the lever (10) and the reversing plate (52) including lost motion.

Position de repos

FIG_1

FIG-2

Position de travail

Position de forçage

FIG_3

EP 0 291 398 B1

Position de repos

FIG_4

EP 0 291 398 B1